# EUROPEAN PATENT APPLICATION

(11) **EP 1 850 527 A1**
(43) Date of publication of application: **31.10.2007**
(21) Application number: 06008891.1
(22) Date of filing: 28.04.2006
(51) Int. Cl.: H04L 12/24, H04L 12/28

(54) **Configuring devices and services on a residential gateway**

(71) Applicant: Koninklijke KPN N.V., 2516 CK The Hague (NL)
(72) Inventor: Van Hulten, Christian Cornelius Maria, 5151 LL Drunen (NL)
(74) Representative: Wuyts, Koenraad Maria

(57) **Abstract**

The invention relates to the configuring of a device or a service on a residential gateway (1), whereby the residential gateway (1) receives (101) a signal from a data carrier (2), which signal triggers the residential gateway to start configuring the device or the service on the residential gateway. The residential gateway (1) receives (102) information-data from the data carrier (2), which information-data comprises information about the device or the service to be configured. A configuration-request-message is sent (103) from the residential gateway (1) to a configuration server (3) of a service provider, which configuration-request-message comprises information about the device or the service to be configured. Configuration-data is received (104) and stored in the residential gateway (1) from the configuration server (3), thereby enabling usage of the device or the service on the residential gateway (1).

## Description

### Field

The invention relates to a method for configuring a device or a service on a residential gateway, a data carrier for configuring a device or a service on a residential gateway, and a residential gateway.

### Background

An integrated phone-based home gateway system is known from US 2004/0047310 A1. The gateway system includes a broadband communication device, such as DSL device, an analog modem, a wireless interface, integrated into a screen-phone for providing broadband communication service to home users. This screen-phone based, modular, plug-n-play home gateway interface allows in-home as well as to-home networking, provides automatic data and broadband initialization, configuration and service provisioning, routing and bridging functionality and allows resource sharing among home devices via existing phone wire, wireless, coaxial or optical connections.
The automatic configuring of the gateway system is limited to configuring routing-related settings within the gateway system upon first connection of the gateway system to the to-home network. US 2004/0047310 A1 does not provide a solution for automatically configuring devices or services on the configured gateway system for usage on a network of a service provider.

### Problem definition

Prior art fails to disclose a solution for automatically configuring devices or services on a residential gateway for usage on a network of a service provider.

### Aim of the invention

It is the aim of the invention to provide a solution for automatically configuring devices or services on a residential gateway for usage on a network of a service provider.

### Summary

The present invention provides a solution to the above-mentioned problems.

According to a first aspect of the invention a method is provided for configuring a device or a service on a residential gateway, which advantageously enables the device or the service to be configured on the residential gateway without the need of human interaction. The method can comprise the step of receiving in the residential gateway a signal from a data carrier. The signal can trigger the residential gateway to start configuring the device or the service on the residential gateway. The signal can be received from the data carrier using a wired communication technique or a wireless communication technique. The wireless communication technique can be RFiD. The method can further comprise the step of receiving in the residential gateway information-data from the data carrier, the information-data comprising information about the device or the service to be configured. The method can further comprise the step of sending a configuration-request-message from the residential gateway to a configuration server of a service provider, the configuration-request-message comprising information about the device or the service to be configured. The method can further comprise the step of receiving configuration-data in the residential gateway from the configuration server. The method can further comprise the step of storing in the residential gateway the configuration-data and thereby enabling usage of the device or the service on the residential gateway. The method can further comprise the step of authenticating a user in the residential gateway. This advantageously avoids non-authorized persons to make changes to the configuration. The residential gateway can e.g. authenticate the user by a pin code entered via a key pad linked to the residential gateway or by a finger print scanned via a finger print scanner linked to the residential gateway.

According to a second aspect of the invention a data carrier is provided for configuring a device or a service on a residential gateway, which advantageously enables the device or the service to be configured on a residential gateway without the need of human interaction. The data carrier can comprise a memory for storing information-data comprising information about the device or the service to be configured. The data carrier can further comprise communication means for sending the information-data to the residential gateway. The data carrier can further comprising a RF chip for sending the information-data using a RFiD communication technique.

According to a third aspect of the invention a residential gateway is provided, on which advantageously a device or a service can be configured without the need of human interaction. The residential gateway can comprise a receiver for receiving a signal from a data carrier. The signal can trigger the residential gateway to start configuring a device or a service. The residential gateway can further comprise a receiver for receiving information-data from the data carrier. The information-data can comprise information about the device or the service to be configured. The residential gateway can further comprise communication means for sending a configuration-request-message to a configuration server of a service provider. The configuration-request-message can comprise information about the device or the service to be configured. The residential gateway can further comprise communication means for receiving configuration-data from the configuration server. The residential gateway can further comprise a memory for storing the configuration-data and thereby enabling usage of the device or the service on the residential gateway. The residential gateway can further comprise an authentication means for authenticating a user in the residential gateway. This advantageously avoids non-authorized persons to make changes to the configuration. The authentication means can comprise a key pad. The authentication means can comprise a finger print scanner.

### Brief description of the drawings

The invention will be explained in greater detail by reference to exemplary embodiments shown in the drawings, in which:
Figure 1a shows an example of using a method according to an exemplary embodiment of the invention;
Figure 1b shows an example of using a method according to an exemplary embodiment of the invention;
Figure 2 shows the steps of a method according to an exemplary embodiment of the invention;
Figure 3 shows a data carrier according to an exemplary embodiment of the invention;
Figure 4 shows a residential gateway according to an exemplary embodiment of the invention.

### Detailed description

For the purpose of teaching of the invention, preferred embodiments of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

A residential gateway is installed at the premises of a customer of a service provider. The residential gateway connects in-house communication infrastructures and devices to a network and services of a service provider. Examples of in-house communication infrastructures are LAN, Wireless LAN, cable (television), IPTV, PSTN telephony, ISDN telephony, and etcetera. Examples of in-house communication devices are all devices that can make use of the in-house communication infrastructure such as PCs (with wireless or non-wireless network cards), laptops (with wireless or non-wireless network cards), televisions, set-top boxes, telephones, and etcetera. Examples of service provider networks are ADSL local loop, WiFi local loop, WiMax, cable (television), fiber optic network, PSTN telephony, TSDN telephony, and etcetera. Examples of services of a service provider are Internet, television, telephony, and etcetera. An example of a service provider is a telecommunication operator offering mobile telephony, fixed telephony, Internet and/or television services. Another example of a service provider is a cable television provider, possibly also offering Internet and/or telephony services.

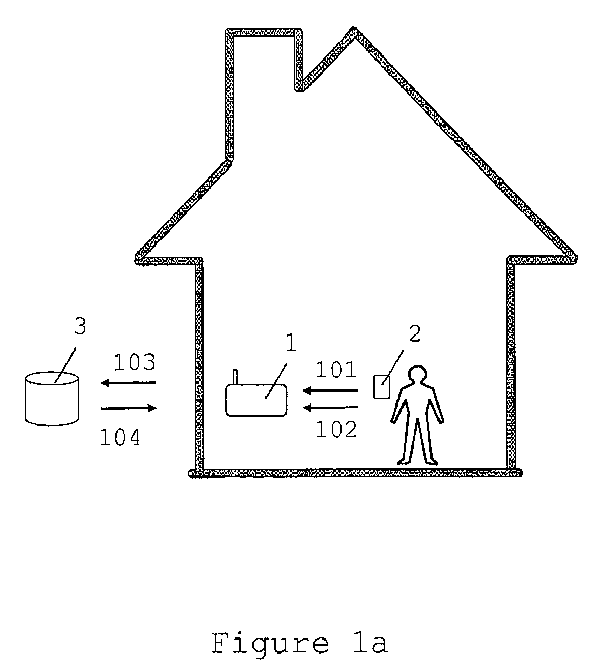

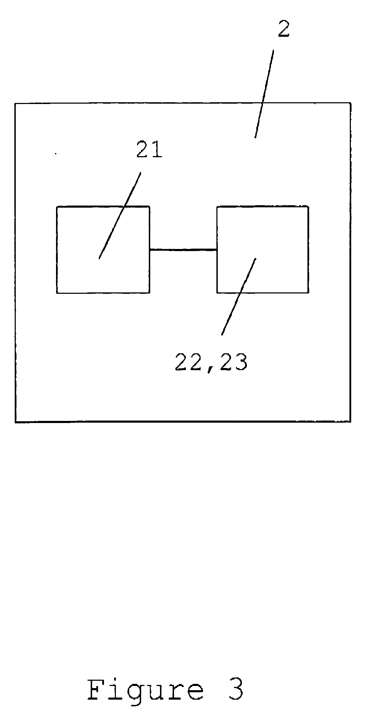

In figure 1a a customer is holding a data carrier (2) near the residential gateway (1). The data carrier (2), which is shown in more detail in figure 3, is e.g. part of a credit card sized plastic card, the data carrier itself being a RF chip (23) molded into the plastic card. On the RF chip (23) information is stored about a new service that the customer purchased. It is possible that the information is stored on a memory that is not part of the RF chip, but linked to the RF chip. In order to enable and configure the service for usage on the residential gateway (1), the customer was given the card to be held near the residential gateway (1). When holding the card close enough to the residential gateway (1), a RFiD signal from the RF chip (23) is received (101) by the residential gateway (1). This triggers the residential gateway (1) to sLart a configuration procedure. Information-data stored in a memory (21) on the RF chip (23) is also sent from the RF chip (23) and received (102) in the residential gateway (1). This information-data can be sent along with the first RFiD signal, but can also be sent in a separate communication. Next the residential, gateway (1) communicates with a configuration server (3) of the service provider to request configuration-data for the service. Hereto a configuration-request-message is sent (103) to the configuration server (3), which is located in the service provider network. The configuration-request-messagc can be in any format supported by the service provider network and comprises information about the service to be configured. When the configuration-data for the service is received (104) from the configuration server (3), the residential gateway (1) stores the configuration-data. It is possible that the configuration-data is processed, (en)coded, reformatted and/or translated before it is stored. Storing the configuration-data enables usage of the service on the residential gateway (1).

An example of a service that could be configured like this is IPTV. If e.g. a customer has a subscription to Internet services using ADSL, the customer may go to a shop to buy IPTV services. IPTV services (this is IP television, also known as television via Internet) are offered to Internet/ADSL customers, but a separate subscription is needed. The customer buys a subscription to IPTV in the shop and receives a credit card sized card in return. By holding the card next to the residential gateway the service will be configured and enabled.

It is possible that the credit card sized cards are bought as a present for someone else. Thus the customer of the residential gateway and the buyer of the card can be different persons.

The data carrier (2) can be included with a device, e.g. by including the data carrier (2) as a RF chip in or on the device. This makes it possible to buy e.g. a non-enabled telephone. It is even possible that the customer did not have a telephone subscription before. Holding the telephone (with the included RF chip) close to the residential gateway will start the configuration of the telephone on the residential gateway, and if there was no subscription before, the service will be enabled as well.

It is also possible that the data carrier is located on the packaging of a device. Holding the packaging close to the residential gateway will then trigger the residential gateway.

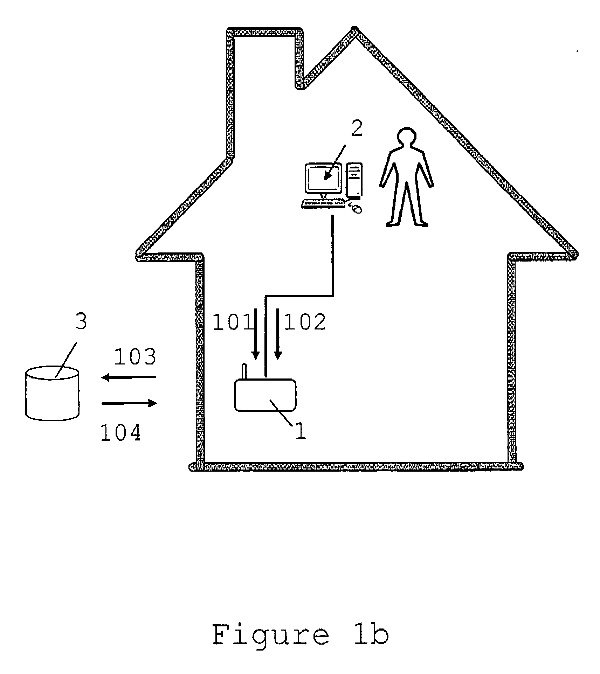

Figure 1b the data carrier (2) is located in a personal computer. The personal computer is connected to the residential gateway (1) by using a network cable. When the cable is connected, the data carrier (2) sends a signal to the residential gateway (1) and the residential gateway (1) is triggered Lo start configuring the personal computer on the residential gateway (1).

The use of RFiD technology is a low cost solution and easy to use for the customer. Any other wireless communication technique can be used though to receive the signal from the data carrier in the residential gateway. Alternatively any wired communication technique can be used.

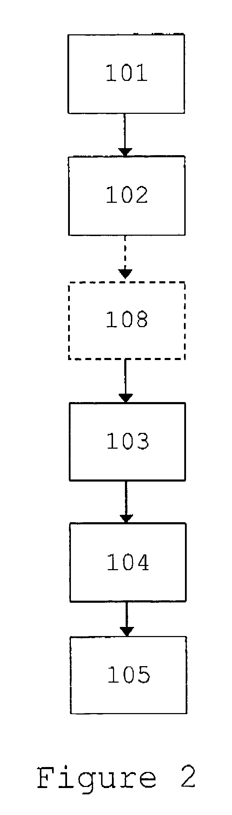

In figure 2 the steps of the method for configuring a device or a service on a residential gateway are shown. In step 101 the residential gateway receives a signal from a data carrier. This signal triggers the residential gateway to start the configuration process for the device or the service on the residential gateway. In step 102 the residential gateway receives information-data from the data carrier. The information-data contains information about the device or the service to be configured. In step 103 a configuration-request-message is sent from the residential gateway to a configuration server of a service provider. The configuration-request-message contains information about the device or the service to be configured. In step 104 configuration-data is received in the residential gateway from the configuration server. In step 105 the configuration-data is stored in the residential gateway. This enables the device or the service to be used on the residential gateway. Optionally in step 108 the customer or user is authenticated in the residential gateway. The authentication can be performed in numerous ways, e.g. by having the user enter a pin code via a key pad linked to the residential gateway. The key pad can be integrated into the residential gateway. Alternatively the keypad is a separate device (possibly part of another device) that can communicate with the residential gateway. Another example of authentication is scanning a finger print of the user. As with the key pad the finger print scanner can be integrated into the residential gateway or a separate device. Step 108 can be performed at any time in the configuration process.

Figure 3 shows the data carrier in more detail. The data carrier (2) has a memory (21) for storing information-data with information about the device or the service to be configured. The data carrier further has communication means (22) for sending the information-data to the residential gateway. The communication means is preferably a RF chip (23), but any other communication means can be used as well.

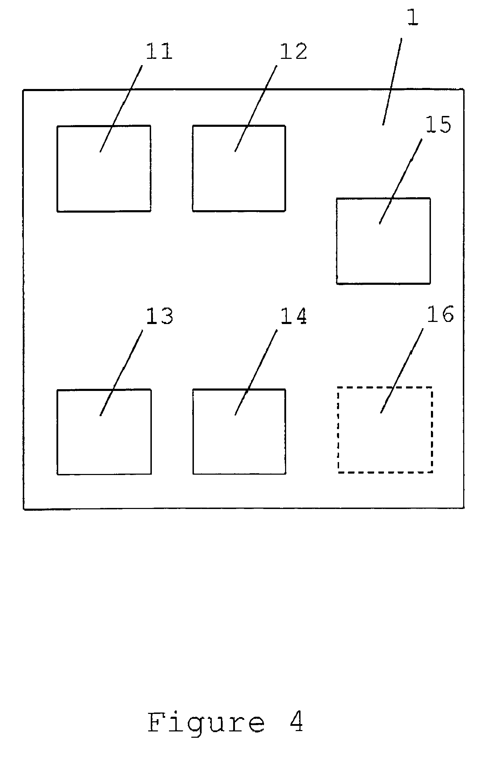

Figure 4 shows the residential gateway in more detail. The residential gateway (1) has a receiver (11) for receiving a signal from a data carrier. The signal triggers the residential gateway (1) to start configuring a device or a service. The residential gateway (1) has a receiver (12) for receiving information-data from the data carrier (2). The information-data contains information about the device or the service to be configured. The residential gateway (1) has communication means (13) for sending a configuration-request-message to a configuration server of a service provider. The configuration-request-message contains information about the device or the service to be configured. The residential gateway (1) has communication means (14) for receiving configuration-data from the configuration server (3). The residential gateway (1) has a memory (15) for storing the configuration-data and thereby enabling usage of the device or the service on the residential gateway (1). Optionally the residential gateway (1) has an authentication means (16) for authenticating the user in the residential gateway. By authenticating the user possible fraud or vandalism can be avoided for it makes it impossible for non-authorized persons to make changes to the configuration. An example of an authentication means comprises a key pad, via which a pin code can be entered by the user. Another example of an authentication means comprises a finger print scanner to scan a finger print of the user.

## Claims

1. Method for configuring a device or a service on a residential gateway (1), the method comprising the steps of
receiving (101) in the residential gateway (1) a signal from a data carrier (2), the signal triggering the residential gateway (1) to start configuring the device or the service on the residential gateway (1);
receiving (102) in the residential gateway (1) information-data from the data carrier (2), the information-data comprising information about the device or the service to be configured;
sending (103) a configuration-request-messaqe from the residential gateway (1) to a configuration server (3) of a service provider, the configuration-request-message comprising information about the device or the service to be configured;
receiving (104) configuration-data in the residential gateway (1) from the configuration server (3);
storing (105) in the residential gateway (1) the configuration-data and thereby enabling usage of the device or the service on the residential gateway (1).

2. Method according to claim 1, the method further comprising the step of authenticating (106) a user in the residential gateway (1).

3. Method according to claim 2, in which the residential gateway (1) authenticates the user by a pin code entered via a key pad linked to the residential gateway (1).

4. Method according to claim 2, in which the residential gateway (1) authenticates the user by a finger print scanned via a finger print scanner linked to the residential gateway (1).

5. Method according to any of the claims 1-4, in which the residential gateway (1) receives the signal from the data carrier (2) using a wired communication technique.

6. Method according to any of the claims 1-4, in which the residential gateway (1) receives the signal from the data carrier (2) using a wireless communication technique.

7. Method according to claim 6, in which the wireless communication technique is RFiD.

8. Data carrier for configuring a device or a service on a residential gateway (1), the data carrier (2) comprising a memory (21) for storing information-data comprising information about the device or the service to be configured, the data carrier further comprising communication means (22) for sending the information-data to the residential gateway (1).

9. Data carrier according to claim 8, the data carrier (2) comprising a RF chip (23) for sending the information-data using a RFiD communication technique.

10. Residential gateway comprising
a receiver (11) for receiving a signal from a data carrier (2), the signal triggering the residential gateway (1) to start configuring a device or a service;
a receiver (12) for receiving information-data from the data carrier (2), the information-data comprising information about the device or the service to be configured;
communication means (13) for sending a configuration-request-message to a configuration server (3) of a service provider, the configuration-request-message comprising information about the device or the service to be configured;
communication means (14) for receiving configuration-data from the configuration server (3);
a memory (15) for storing the configuration-data and thereby enabling usage of the device or the service on the residential gateway (1).

11. Residential gateway according to claim 10, the residential gateway (1) further comprising an authentication means (16) for authenticating a user in the residential gateway (1).

12. Residential gateway according to claim 11, in which the authentication means (16) comprises a key pad.

13. Residential gateway according to claim 11, in which the authentication means (16) comprises a finger print scanner.
